# EUROPÄISCHE PATENTANMELDUNG

(11) **EP 2 244 176 A1**
(43) Veröffentlichungstag der Anmeldung: **27.10.2010**
(21) Anmeldenummer: 09010001.7
(22) Anmeldetag: 03.08.2009
(51) Int. Cl.: G06F 3/048

(54) **Verfahren zum Steuern einer Anzeigeeinrichtung mittels einer Steuereinrichtung in einem Computersystem sowie Computerprogramm-Produkt**

(30) Priorität: 03.04.2009 EP 09004964; 08.04.2009 DE 102009017078
(71) Anmelder: Jurasoft GmbH & Co. KG, 14469 Potsdam (DE)
(72) Erfinder: Becker, Peter, 14469 Potsdam (DE)
(74) Vertreter: Bittner, Thomas L.

(57) **Zusammenfassung**

Die Erfindung betrifft ein Verfahren zum Steuern einer Anzeigeeinrichtung (1) mittels einer Steuereinrichtung (4) in einem Computersystem, wobei das Verfahren die folgenden Schritte umfasst: Darstellen eines grafischen Oberflächenelementes (22), welches mit einem Softwareobjekt verlinkt ist, am Rand (20) einer Anzeigefläche (2) der Anzeigeeinrichtung (1), Erfassen einer Positionierung einer grafischen Markierung (27), die auf der Anzeigefläche (2) angezeigt wird und einer Benutzereingabeeinrichtung zugeordnet ist, auf der Anzeigefläche (2) in Bezug zu dem grafischen Oberflächenelementes (22) mittels der Steuereinrichtung (4), Darstellen eines ersten flüchtigen Grafikelementes (29; 61), welches mit einem Softwareobjekt verlinkt ist, auf einer von dem Rand (20) der Anzeigefläche (2) abgewandten Seite des grafischen Oberflächenelementes (22) und sowie eines das grafische Oberflächenelement (22) und das erste flüchtige Grafikelement (29; 61) grafisch einander zuordnenden Zuordnungselementes auf der Anzeigefläche, Prüfen mittels der Steuereinrichtung (4), ob Anzeigebereiche auf einer von dem grafischen Oberflächenelement (22) abgewandten Seite des ersten flüchtigen Grafikelementes (29; 61) und / oder zumindest einer der hierzu benachbarten Seiten des ersten flüchtigen Grafikelementes (29; 61) für eine grafische Addition eines zweiten flüchtigen Grafikelementes frei sind, welches mit einem Softwareobjekt verlinkt ist, und Darstellen eines Additionssymbols (33; 34) auf der Anzeigefläche (2), welches dem Benutzer eine erlaubte grafische Addition anzeigt, in einem oder mehreren freien Anzeigebereichen benachbart zu dem ersten flüchtigen Grafikelement (29; 61), wenn das vorangehende Prüfen freie Anzeigebereiche ergibt. Des Weiteren betrifft die Erfindung ein ComputerprogrammProdukt mit Programmcode.

## Beschreibung

Die Erfindung betrifft ein Verfahren zum Steuern einer Anzeigeeinrichtung mittels einer Steuereinrichtung in einem Computersystem sowie ein Computerprogramm-Produkt.

### Hintergrund der Erfindung

Im Speicher eines Personalcomputers (PC) ist in einem hierarchisch aufgebauten Filesystem eine vom Anwender oftmals nicht zu unüberschaubare Vielzahl von Dateien gespeichert. Ausführbare Objekte wie Programme, Datensammlungen oder multimediale Dateien sind darin vermischt mit einer Vielzahl anderer für die Ausführung nötiger Dateien gespeichert, so dass für den Benutzer keine Bedienoberfläche für eine produktive PC Nutzung gegeben ist.

Anwendungsprogramme ordnen ihre Dateien, zum Beispiel E-Mails, Dokumente, Fotos oder multimedia Dateien, je nach Anwendung in speziell gestalteten Datensammlungen, die der Anwender je nach aufzurufender Funktion und Dateiart einem speziellen Anwendungsprogramm gedanklich zuordnen und dann über das jeweilige Programm und seine speziellen Oberfläche starten muss. Diese Verteilung von Datenhaltungen macht mit der zunehmenden Vermehrung von Daten und Anwendungsprogrammen die PC-Bedienung unpraktischer und unproduktiver. Die Vermehrung an Anwendungsprogrammen und Datenhaltungen führt im Ergebnis zu einer Verschlechterung der Nutzbarkeit des Gesamtsystems aufgrund der Vervielfachung von Datenhaltungs- und Workflow-Strukturen zur Nutzung der gesamten Funktionalität des PCs.

Als universelles Bediensystem für den Aufruf von Programmen und Daten stehen heute der klassische Windows- oder Apple-Desktop zur Verfügung, die den Stand der Technik darstellen. Diese sind in einer Zeit entwickelt, als diese heutige immense Vermehrung von Datenarten und Programmfunktionalitäten kaum vorstellbar waren, sie sind für die moderne PC-Nutzung nicht mehr genügend. Es handelt sich um zweidimensionale Oberflächen, die zwar eine Anordnung durch den Nutzer von grafisch und textlich bezeichneten Aufruffunktionen für den Inhalt des Datenspeichers zur Verfügung stellen, den Anwender aber nicht bei einer seine persönlichen Arbeitsabläufe und Benutzungsgewohnheiten abbildenden dynamisch, fort laufend veränderlichen Ordnung der PC Funktionalitäten programmtechnisch unterstützen. Auf einem PC-Desktop kann der Anwender eine beschränkte Anzahl von sogenannten Icons zum Programmabruf oder zur Anzeige von Dateien platzieren oder abbilden, aber das Konzept des Desktops betrachtet jedes Icon für sich, sie stehen zusammenhanglos nebeneinander, das herkömmliche System bildet weder optische noch funktionale Ordnungsstrukturen für die Nutzung der Funktionen im Zusammenhang ab.

In Verbindung mit dem Steuern einer Anzeigeeinrichtung eines Computersystems ist es bekannt, auf einer Anzeigefläche der Anzeigeeinrichtung, nämlich dem Desktop, grafische Symbole oder Elemente, die auch als Icons bezeichnet werden, darzustellen, welche ihrerseits mittels einer Steuereinrichtung des Computersystems mit einem so genannten Softwareobjekt verlinkt sind, was einer funktionellen Zuordnung zwischen dem grafischen Element und dem Softwareobjekt entspricht. Beispiele für ein solches Softwareobjekt sind Dateien, ausführbare Programme oder auch Verzeichnisse mit mehreren Dateien. Wählt der Benutzer des Computersystems mit Hilfe einer Eingabeeinrichtung, zum Beispiel einer Tastatur oder einer Mauseinrichtung, ein auf der Anzeigefläche dargestelltes, grafisches Element aus, kann hierdurch die Verlinkung zu dem Softwareobjekt aktiviert werden, indem beispielsweise eine Software-Applikation auf dem Computersystem gestartet wird. In einem anderen Beispiel wird hierdurch ein Dateiverzeichnis auf der Anzeigefläche dargestellt.

In Verbindung mit solchen grafischen Symbolen oder Elementen kann vorgesehen sein, dass ein oder mehrere grafische Elemente flüchtig dargestellt werden, was bedeutet, dass sie auf der Anzeigefläche nur erscheinen, wenn zuvor mit Hilfe der Steuereinrichtung des Computersystems eine Positionierung einer grafischen Markierung, zum Beispiel eines Cursors der Mauseinrichtung, in einem bestimmten Bereich der Anzeigefläche detektiert wurde. Ein derart flüchtiges Darstellen von grafischen Elementen ist zum Beispiel in Verbindung mit so genannten Pull-Down-Menüs bekannt. Derartige grafische Elemente sind somit nicht dauerhaft Bestandteil der grafischen Oberfläche auf der Anzeigeeinrichtung. Es ist auch bekannt, grafische Oberflächenelemente, die im Wesentlichen dauerhaft auf der Anzeigefläche dargestellt werden, wenn das Computersystem gestartet ist, gelöscht oder neu erzeugt werden können. Darüber hinaus "verschwinden" derartige grafische Oberflächenelemente auch von der Anzeigefläche, wenn sie zum Beispiel von einer gestarteten Software-Applikation verdeckt werden. Sie werden jedoch auf der Anzeigefläche dargestellt, wenn der Benutzer eine Art Grundeinstellung des Computersystems benutzt, die sich insbesondere dadurch auszeichnen kann, dass keine Software-Applikationen gestartet sind.

Die Menge der auf der Anzeigefläche des Computersystems darzustellenden, grafischen Elemente nimmt aufgrund der Vielfalt der zur Verfügung stehenden Software-Applikationen ständig zu. Es besteht deshalb Bedarf für Technologien zur effizienten und benutzerfreundlichen Steuerung der Anzeigeeinrichtung des Computersystems.

### Zusammenfassung der Erfindung

Aufgabe der Erfindung ist es, ein verbessertes Verfahren zum Steuern einer Anzeigeeinrichtung mittels einer Steuereinrichtung in einem Computersystem zu schaffen, dass eine optimierte und benutzerfreundliche Ausnutzung einer Anzeigefläche der Anzeigeeinrichtung des Computersystems ermöglicht.

Diese Aufgabe wird erfindungsgemäß durch ein Verfahren zum Steuern einer Anzeigeeinrichtung mittels einer Steuereinrichtung in einem Computersystem nach dem unabhängigen Anspruch 1 gelöst. Weiterhin sieht die Erfindung ein Computer-Programmprodukt nach dem unabhängigen Anspruch 6 vor. Vorteilhafte Ausgestaltungen der Erfindung sind Gegenstand von abhängigen Unteransprüchen.

Die Erfindung stellt neue Techniken zum Steuern einer Anzeigeeinrichtung eines Computersystems zur Verfügung. Nach einem Aspekt der Erfindung ist ein Verfahren zum Steuern einer Anzeigeeinrichtung mittels einer Steuereinrichtung in einem Computersystem geschaffen, wobei das Verfahren die folgenden Schritte umfasst:
- Darstellen eines grafischen Oberflächenelementes, welches mit einem Softwareobjekt verlinkt ist, am Rand einer Anzeigefläche der Anzeigeeinrichtung,
- Erfassen einer Positionierung einer grafischen Markierung, die auf der Anzeigefläche angezeigt wird und einer Benutzereingabeeinrichtung zugeordnet ist, auf der Anzeigefläche in Bezug zu dem grafischen Oberflächenelementes mittels der Steuereinrichtung,
- Darstellen eines ersten flüchtigen Grafikelementes, welches mit einem Softwareobjekt verlinkt ist, auf einer von dem Rand der Anzeigefläche abgewandten Seite des grafischen Oberflächenelementes und sowie eines das grafische Oberflächenelement und das erste flüchtige Grafikelement grafisch einander zuordnenden Zuordnungselementes auf der Anzeigefläche,
- Prüfen mittels der Steuereinrichtung, ob Anzeigebereiche auf einer von dem grafischen Oberflächenelement abgewandten Seite des ersten flüchtigen Grafikelementes und / oder zumindest einer der hierzu benachbarten Seiten des ersten flüchtigen Grafikelementes für eine grafische Addition eines zweiten flüchtigen Grafikelementes frei sind, welches mit einem Softwareobjekt verlinkt ist, und
- Darstellen eines Additionssymbols auf der Anzeigefläche, welches dem Benutzer eine erlaubte grafische Addition anzeigt, in einem oder mehreren freien Anzeigebereichen benachbart zu dem ersten flüchtigen Grafikelement, wenn das vorangehende Prüfen freie Anzeigebereiche ergibt.

Mit Hilfe der Erfindung wird eine optimale Flächenausnutzung der Anzeigefläche in Verbindung mit randseitig angeordneten, grafischen Oberflächenelementen erreicht. Die Darstellung des einen oder der mehreren grafischen Oberflächenelemente kann auf einer beliebigen Seite des Randes der Anzeigefläche erfolgen. Die Darstellung einer von flüchtigen Grafikelementen gebildeten Symbolstruktur erfolgt dann bei dem vorgeschlagenen Verfahren bevorzugt in einer Richtung von dem Rand der Anzeigefläche weg. Während das grafische Oberflächenelement selbst bevorzugt Bestandteil einer Oberflächengrundanzeige des Computersystems ist, werden die flüchtigen Grafikelemente auf der Anzeigefläche nur dann angezeigt, wenn für die grafische Markierung, beispielsweise einen Cursor einer Mauseinrichtung, eine bestimmte Positionierung auf der Anzeigefläche erfasst wird, nämlich in Bezug auf eines der grafischen Oberflächenelemente, die ihrerseits randseitig angeordnet sind. Das Erfassen der Positionierung der grafischen Markierung in Bezug auf das grafische Oberflächenelement bedeutet, dass die grafische Markierung entweder benachbart zu dem grafischen Oberflächenelement detektiert wird oder sogar wenigstens teilweise mit der Darstellung des grafischen Oberflächenelementes auf der Anzeigefläche überlappt.

Die flüchtigen Grafikelemente sind jeweils mittels der Steuereinrichtung des Computersystems mit einem Softwareobjekt verlinkt, bei dem es sich um ein beliebiges Objekt im Rahmen der auf dem Computersystem ablaufenden Applikationen handeln kann. Beispielsweise kann es sich um ein Verzeichnis mit einer oder mehreren Dateien handeln, zum Beispiel einer Bilddatei oder einer digitalen Sprachdatei. Auch kann es sich bei dem Objekt auch um eine ausführbare Software-Applikation handeln. Die Verlinkung des flüchtigen Grafikelementes mit dem Softwareobjekt bedeutet, dass hier eine gegenseitige Zuordnung erfolgt. Mittels Auswählen des flüchtigen Grafikelementes, zum Beispiel mit Hilfe der Mauseinrichtung des Computersystems, kann der Benutzer in einer Ausführungsform auf das Softwareobjekt zugreifen, zum Beispiel ein Bild anzeigen, eine Datenausgabe initiieren oder eine andere Software-Applikation starten.

Wenn die Steuereinrichtung des Computersystems die grafische Markierung nun in Bezug zu dem grafischen Oberflächenelement erfasst hat, werden in einer Ausführung das erste flüchtige Grafikelement sowie ein das grafische Oberflächenelement und das erste flüchtige Grafikelement grafisch einander zuordnendes Zuordnungselement auf der Anzeigefläche dargestellt. Hierbei kann es sich um eine direkte grafische Zuordnung zwischen dem grafischen Oberflächenelement und dem ersten flüchtigen Grafikelement handeln, was beispielsweise mittels eines die beiden Elemente verbindenden Striches auf der Anzeigefläche dargestellt werden kann. Auch kann vorgesehen sein, dass das erste flüchtige Grafikelement über ein anderes flüchtiges Grafikelement dem grafischen Oberflächenelement grafisch zugeordnet ist, was mit Hilfe von Strichelementen zwischen dem grafischen Oberflächenelement und dem anderen flüchtigen Grafikelement sowie zwischen dem anderen flüchtigen Grafikelement und dem ersten flüchtigen Grafikelement auf der Anzeigefläche dargestellt werden kann. In dieser Ausführungsform wird dann das andere flüchtige Grafikelement zusammen mit dem ersten flüchtigen Grafikelement angezeigt. Bei der zuletzt beschriebenen Ausführungsform existieren also bereits zwei so genannte Mutter-Kind-Beziehungen, nämlich zwischen dem grafischen Oberflächenelement und dem anderen flüchtigen Grafikelement sowie zwischen dem anderen flüchtigen Grafikelement und dem ersten flüchtigen Grafikelement.

Nach dem Prüfen auf freie Anzeigebereiche benachbart zu dem dargestellten, ersten flüchtigen Grafikelement werden in einem oder mehreren freien Anzeigebereichen benachbart zu dem ersten flüchtigen Grafikelement Additionssymbole grafisch dargestellt, zum Beispiel in Form eines Pluszeichens. Hierdurch wird dem Benutzer angezeigt, dass in diesem Anzeigebereich ein neues flüchtiges Grafikelement vom Benutzer platziert werden kann, um die dem grafischen Oberflächenelement zugeordnete Symbolstruktur von flüchtigen Grafikelementen zu erweitern. Das Prüfen auf freie Anzeigebereiche verhindert einen Konflikt mit bereits existierenden, flüchtigen Grafikelementen und steuert die Anzeigeeinrichtung deshalb in konfliktfreier und benutzerfreundlicher Art und Weise. In Anzeigebereichen benachbart zu dem ersten flüchtigen Grafikelement, die als nicht frei klassifiziert werden, wird kein Additionssymbol dargestellt.

Eine bevorzugte Weiterbildung der Erfindung sieht vor, dass beim Prüfen auf freie Anzeigebereiche ein Anzeigebereich als nicht frei klassifiziert wird, wenn in dem Anzeigebereich ein drittes flüchtiges Grafikelement angezeigt wird, welches mit einem Softwareobjekt verlinkt und welches ebenfalls dem grafischen Oberflächenelement zugeordnet ist. Die Klassifizierung als nicht freier Anzeigebereich hat dann zur Folge, dass dort kein grafisches Additionssymbol dargestellt wird. Bei dem dem dritten flüchtigen Grafikelement zugeordneten Softwareobjekt kann es sich um das gleiche oder ein anderes Softwareobjekt handeln als das Softwareobjekt, welches dem ersten und / oder dem zweiten flüchtigen Grafikelement zugeordnet ist.

Bei einer zweckmäßigen Ausgestaltung der Erfindung kann vorgesehen sein, dass beim Prüfen auf freie Anzeigebereiche Anzeigenbereiche auf den vier Seiten eines rechtwinkligen Vierecks geprüft werden. Auf diese Art und Weise erfolgt die Prüfung auf freie Anzeigebereiche entsprechend den vier Grundhimmelsrichtungen, nämlich Nord, Ost, Süd und West. Mittellinien der Anzeigebereiche bilden im Wesentlichen einen Winkel von 90 Grad. Auf diese Art und Weise erfolgt dann auch die Darstellung der Additionssymbole sowie die Neuerstellung flüchtiger Grafikelemente, wenn der Benutzer Letzteres veranlasst. So werden die flüchtigen Grafikelemente beim Ausbau der dem grafischen Oberflächenelement zugeordneten Symbolstruktur dem Dominoprinzip entsprechend angeordnet.

Eine vorteilhafte Ausfiihrungsform der Erfindung sieht vor, dass das erste flüchtige Grafikelement mehrere flüchtige Grafikteilelemente umfassend dargestellt wird, die jeweils mit einem Softwareobjekt verlinkt ist. Beispielsweise können zwei, drei oder vier Softwareobjekte einem flüchtigen Grafikelement zugeordnet sein, was dann eine entsprechende Anzahl von flüchtigen Grafikteilelementen oder -symbolen im Bereich des flüchtigen Grafikelementes zur Folge hat.

Bevorzugt sieht eine Fortbildung der Erfindung weiterhin die folgenden Schritte vor: Erfassen einer Positionierung der grafischen Markierung auf der Anzeigefläche in Bezug zu einem der Additionssymbole mittels der Steuereinrichtung, Darstellen eines neuen flüchtigen Grafikelementes im Anzeigebereich des einen Additionssymbols sowie eines das erste flüchtige Grafikelement und das neue flüchtige Grafikelement grafisch einander zuordnenden Zuordnungselementes auf der Anzeigefläche und Verlinken des neuen flüchtigen Grafikelementes mit einem Softwareobjekt gemäß einer zuvor mittels der Steuereinrichtung erfassten Benutzerauswahl. Wird also nach dem Darstellen eines oder mehrerer Additionssymbole auf der Anzeigefläche benachbart zu dem ersten flüchtigen Grafikelement mittels der Steuerung erfasst, dass der Benutzer die grafische Markierung in dem Bereich eines der Additionssymbole verlagert hat, zum Beispiel in einem Anzeigeflächenbereich benachbart zu dem Additionssymbol oder sogar hiermit überlappend, wird in diesem Bereich der Anzeigefläche das Additionssymbol ersetzt durch ein neues flüchtiges Grafikelement. Gleichzeitig wird das neue flüchtige Grafikelement grafisch dem ersten flüchtigen Grafikelement zugeordnet, zum Beispiel mittels eines Striches zwischen den Grafikelementen.

Das neu erstellte flüchtige Grafikelement wird sodann mit einem Softwareobjekt verlinkt, welches einer zuvor mittels der Steuereinrichtung erfassten Benutzerauswahl entspricht. Diese Auswahl durch den Benutzer erfolgt in einem Ausführungsbeispiel dadurch, dass der Benutzer mittels einer so genannten Drag-Drop-Funktion ein auf der Anzeigefläche dargestelltes grafisches Element auswählt und in den Bereich des Additionssymbols zieht. Die diesem grafischen Element zugeordnete Auswahl eines oder mehrerer Softwareobjekte wird dann für das neue flüchtige Grafikelement ganz oder teilweise übernommen. Das oder die übernommenen Softwareobjekte sowie das neue flüchtige Grafikelement sind dann in die Symbolstruktur flüchtiger Grafikelemente für das grafische Oberflächenelement integriert. Natürlich kann auch vorgesehen sein, dass ein flüchtiges Grafikelement mittels Benutzerauswahl aus einer solchen Struktur wieder entfernt wird, was zum Beispiel auch mittels der Drag-Drop-Funktion implementiert werden kann.

### Beschreibung bevorzugte Ausführungsformen der Erfindung

Die Erfindung im Folgenden anhand von Ausführungsbeispielen unter Bezugnahme auf Figuren einer Zeichnung näher erläutert. Hierbei zeigen:
- Fig. 1: eine schematische Darstellung eines Computersystems,
- Fig. 2: eine schematische Darstellung einer Anzeigefläche mit grafischen Elementen oder Symbolen,

- Fig. 3: eine schematische Darstellung der Anzeigefläche aus Fig. 2 mit einer veränderten Anordnung der grafischen Elemente oder Symbole,
- Fig.4.: eine schematische Darstellung der Anzeigefläche aus Fig. 2 mit einer veränderten Anordnung der grafischen Elemente oder Symbole,
- Fig. 5: eine schematische Darstellung der Anzeigefläche aus Fig. 2 mit einer veränderten Anordnung der grafischen Elemente oder Symbole,
- Fig. 6.: eine schematische Darstellung der Anzeigefläche aus Fig. 2 mit einer veränderten Anordnung der grafischen Elemente oder Symbole,
- Fig. 7: eine schematische Darstellung der Anzeigefläche aus Fig. 2 mit einer veränderten Anordnung der grafischen Elemente oder Symbole,
- Fig. 8: eine schematische Darstellung der Anzeigefläche aus Fig. 2 mit einer veränderten Anordnung der grafischen Elemente oder Symbole und
- Fig. 9: eine schematische Darstellung der Anzeigefläche aus Fig. 2 mit einer weiteren Anordnung der grafischen Elemente oder Symbole.

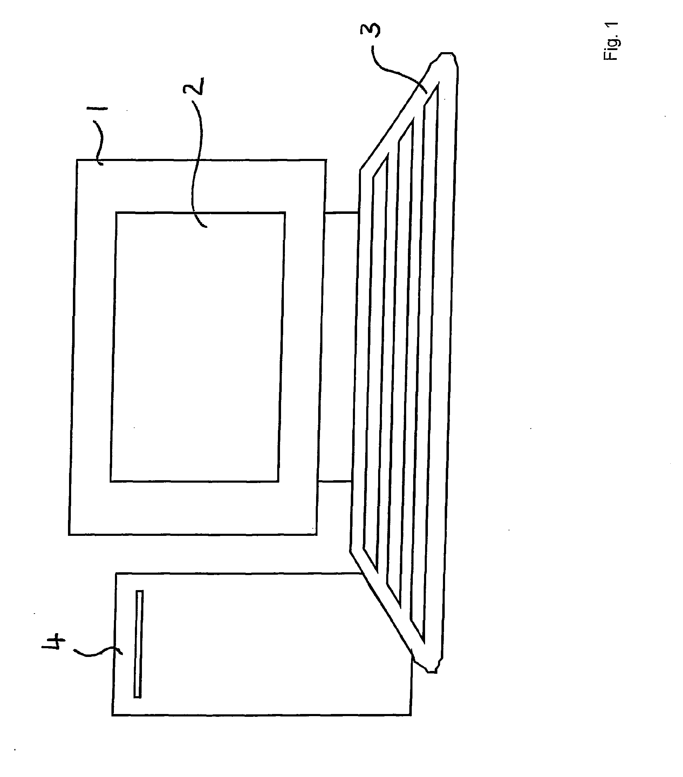

Fig. 1 zeigt eine schematische Darstellung eines Computersystems mit einer als Bildschirm ausgeführten Anzeigeeinrichtung 1, auf der eine Anzeigefläche 2 zum Darstellen von Informationen zur Verfügung steht. Verbunden ist die Anzeigeeinrichtung 1 mit einer Tastatur 2, die zum Erfassen von Benutzereingaben dient. Darüber hinaus ist die Anzeigeeinrichtung 1 mit einer Steuereinrichtung 4 verbunden, die bei dem dargestellten Ausführungsbeispiel in einem separaten Gehäuse gebildet ist. Die Steuereinrichtung 4 umfasst üblicherweise wenigstens eine Prozessoreinrichtung sowie eine Speichereinrichtung und geeignete Schnittstellen zum Datenaustausch mit Peripheriegeräten, wozu die Anzeigeeinrichtung 1 und die Tastatur 3 gehören. In Fig. 1 nicht dargestellt ist eine optionale Mauseinrichtung. Das Computersystem kann als ein so genannter Personalcomputer ausgeführt sein.

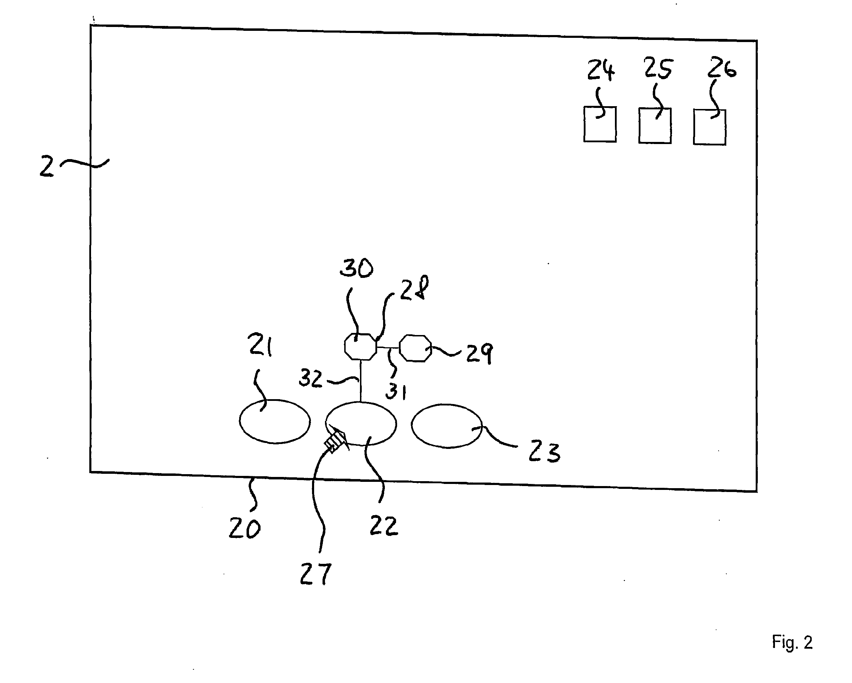

Unter Bezugnahme auf die Fig. 2 bis 8 werden nachfolgend Ausführungsbeispiele für ein Verfahren zum Steuern der Anzeigeeinrichtung 1 mittels der Steuereinrichtung 4 in dem Computersystem nach Fig. 1 beschrieben. Die Fig. 2 bis 8 zeigen hierbei verschiedene Darstellungen auf der Anzeigefläche 2 der Anzeigeeinrichtung 1.

Gemäß Fig. 2 sind auf der Anzeigefläche 2 benachbart zu einem unteren Rand 20 mehrere grafische Oberflächenelemente 21, 22, 23 dargestellt. Auf der Anzeigefläche 2 sind darüber hinaus weitere grafische Oberflächenelemente 24, 24, 26 gezeigt. Den grafischen Oberflächenelementen 21, ..., 26 sind jeweils ein oder mehrere Softwareobjekte zugeordnet, auf die vom Benutzer mittels Auswahl des jeweiligen grafischen Oberflächenelementes zugegriffen werden kann, beispielsweise indem eine grafische Markierung 27, die einer Mauseinrichtung und / oder der Tastatur 3 des Computersystems zugeordnet ist, in dem Bereich des grafischen Oberflächenelementes verlagert und eine Benutzereingabe getätigt wird. Beispielsweise kann auf diese Art und Weise eine Software-Applikation auf dem Computersystem gestartet werden.

Gemäß Fig. 2 ist für die grafischen Oberflächenelemente 21, 22, 23 vorgesehen, dass eine jeweils zugeordnete Symbolstruktur mit einem oder mehreren flüchtigen Grafikelementen auf der Anzeigefläche dargestellt wird, wenn mittels der Steuereinrichtung 4 eine Positionierung der grafischen Markierung 27 in Bezug auf eines der grafischen Oberflächenelemente 21, 22, 23 festgestellt wird. Bei der in Fig. 2 dargestellten Ausführungsform wird für das mittlere grafische Oberflächenelement 22 eine Symbolstruktur 28 mit einem ersten und einem zweiten flüchtigen Grafikelement 29, 30 dargestellt. Verbunden sind das grafische Oberflächenelement 22 und das erste und das zweite flüchtige Grafikelement 29, 30 über grafische Zuordnungselemente 31, 32. Wie in Fig. 2 dargestellt erfolgt das "Ausklappen" oder Darstellen der Symbolstruktur 28 stets in einer Richtung weg vom Rand 20 der Anzeigefläche 2, bevorzugt in einer Richtung senkrecht zum Rand 20.

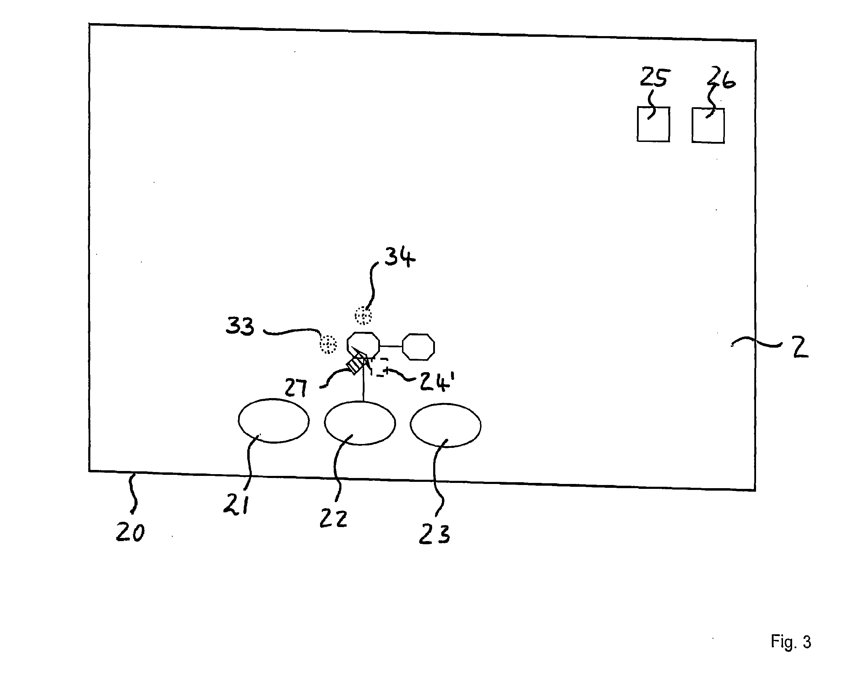

Fig. 3 zeigt eine Darstellung, bei der nun die grafische Markierung 27 in dem Bereich des ersten flüchtigen Grafikelementes 29 bewegt wurde. Hierauf hat die Steuereinrichtung 4 geprüft, auf welchen Seiten des ersten flüchtigen Grafikelementes 29 noch freie Anzeigebereiche existieren, so dass dort neue flüchtige Grafikelemente darstellbar wären. Für die als frei klassifizierten Anzeigebereiche werden dann gemäß Fig. 3 Additionssymbole 33, 34 auf der Anzeigefläche 2 angezeigt.

In Fig. 3 ist mit Hilfe eines grafischen Symbols 24' schematisch dargestellt, dass der Benutzer zuvor das weitere grafische Oberflächenelement 24 mittels Drag-Drop-Funktion ausgewählt hat.

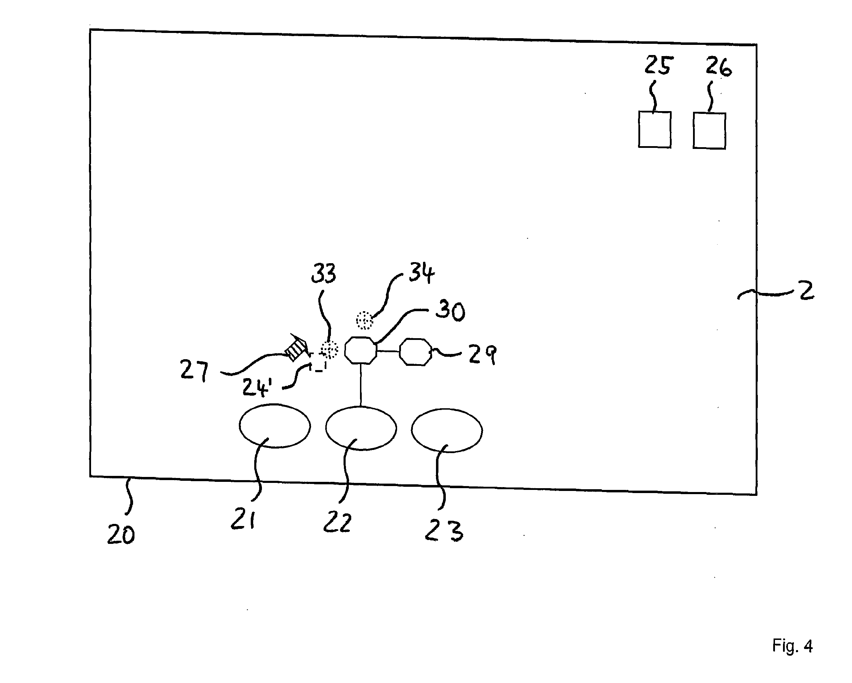

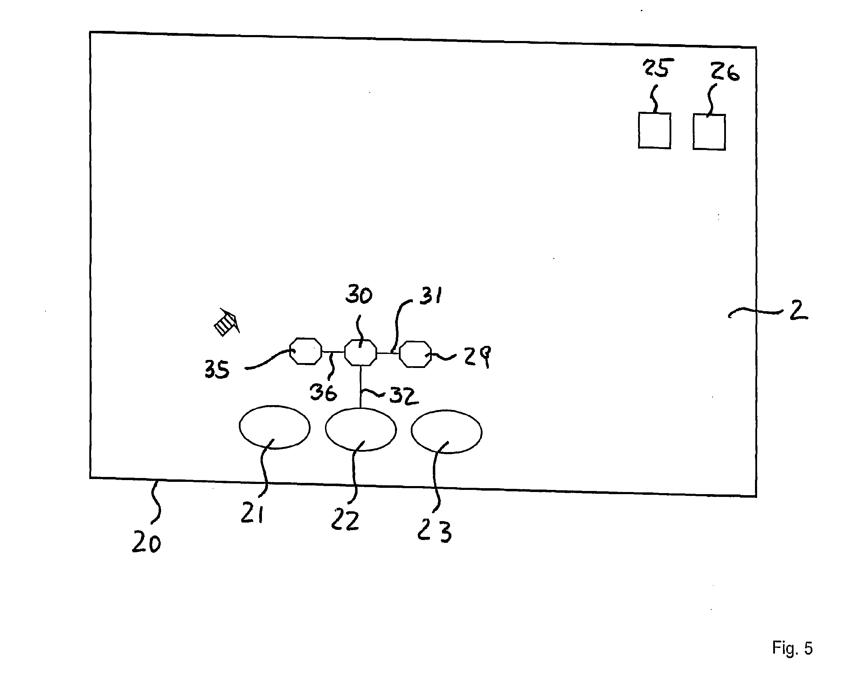

Gemäß Fig. 4 kann der Benutzer dann mit Hilfe der grafischen Markierung 27 einen der den beiden Additionssymbolen 33, 34 entsprechenden Anzeigebereich auswählen, indem die grafische Markierung 27 dorthin verlagert wird. Erfasst die Steuereinrichtung 4 eine solche Verlagerung gemäß der in Fig. 4 dargestellten Situation wird im nächsten Schritt gemäß Fig. 5 ein neues flüchtiges Grafikelement 35 auf der Anzeigefläche 2 dargestellt, welches mit Hilfe eines neuen grafischen Zuordnungselementes 36 mit dem ersten flüchtigen Grafikelement verbunden ist. Auf diese Art und Weise wurde die dem mittleren grafischen Oberflächenelement 22 zugeordnete Symbolstruktur mit flüchtigen oder verdeckt dargestellten Grafikelementen ergänzt.

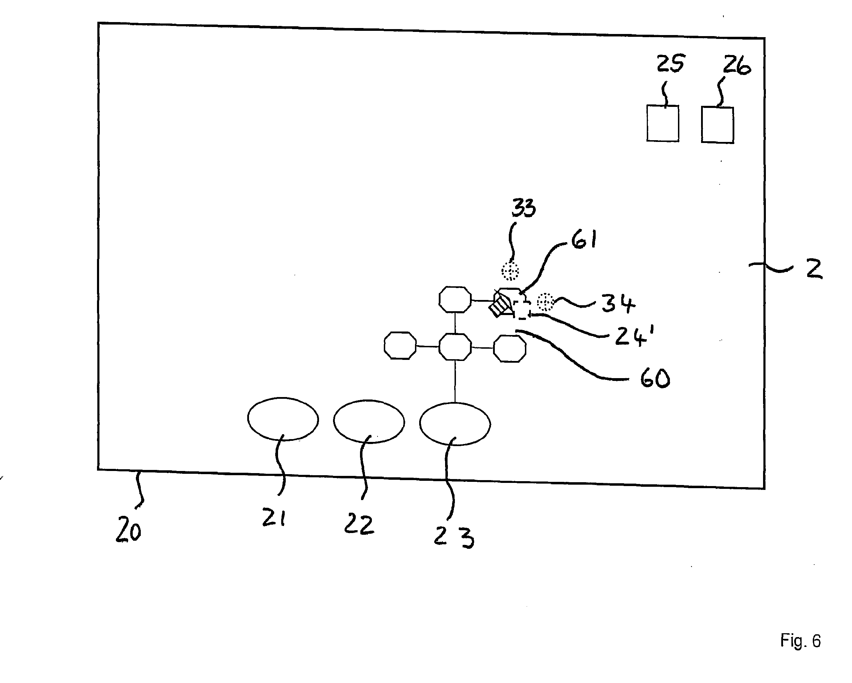

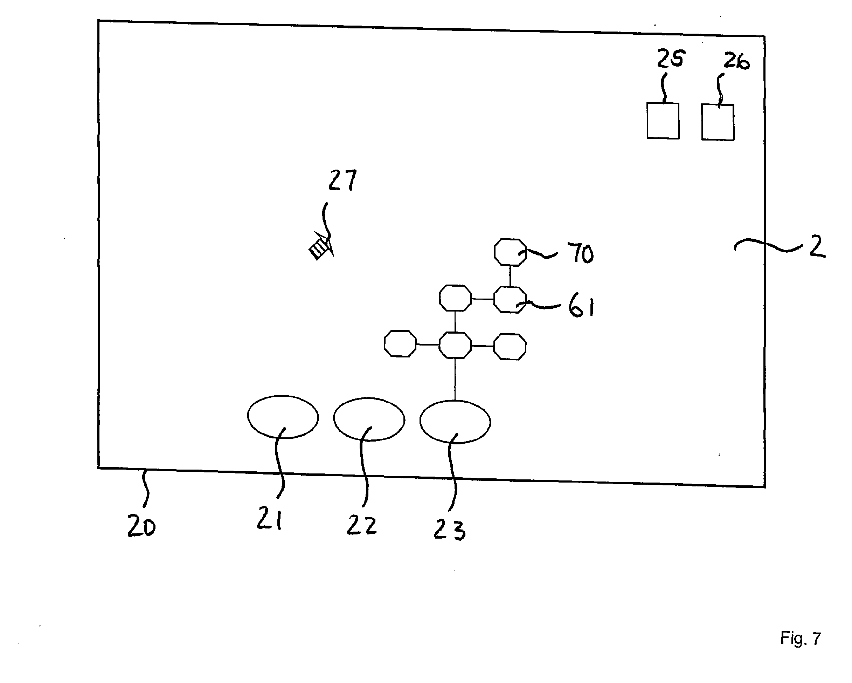

Fig. 6 zeigt ein Ausführungsbeispiel, bei dem wiederum Additionssymbole 33, 34 dargestellt sind, die dem Benutzer freie Anzeigebereich zur Addition weiterer flüchtiger Grafikelemente anzeigen. Die Steuereinrichtung 4 hat diesem Ausführungsbeispiel nach dem Erfassen der grafischen Markierung 27 beim Prüfen freier Anzeigebereiche festgestellt, dass in einem Bereich 60 unterhalb eines vom Benutzer ausgewählten, flüchtigen Grafikelementes 61 kein freier Anzeigebereich existiert. Vielmehr ist der Bereich 60 bereits belegt, weshalb die Additionssymbole 33, 34 nur oberhalb und auf der rechten Seite des vom Benutzer ausgewählten, flüchtigen Grafikelementes 61 angezeigt werden. Gemäß Fig. 7 wurde dann eine Benutzerauswahl für den Bereich oberhalb des vom Benutzer ausgewählten, flüchtigen Grafikelementes 61 erfasst und ein weiteres neues, flüchtiges Grafikelement 70 dargestellt.

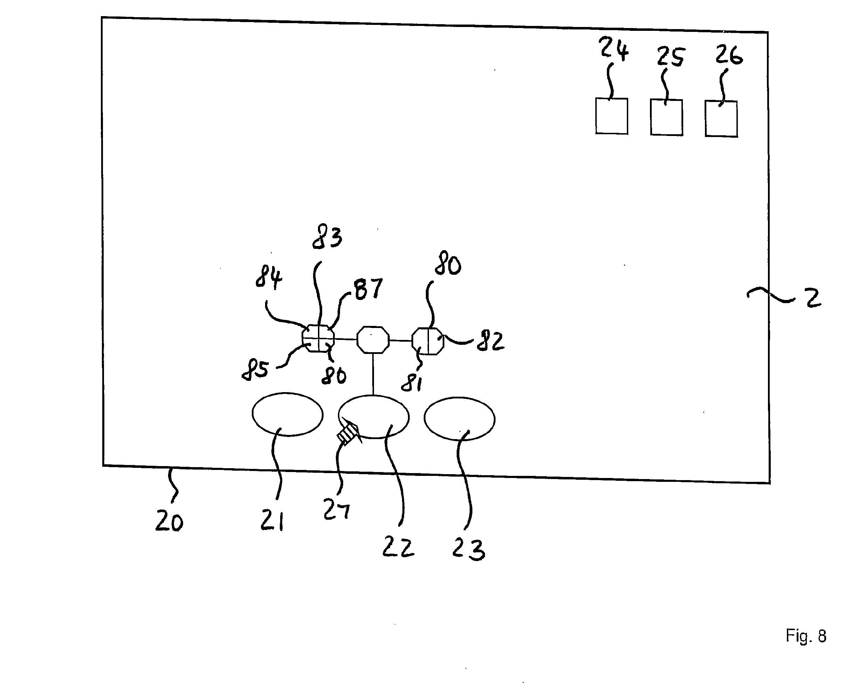

In Fig. 8 ist schematisch dargestellt, dass die flüchtigen Grafikelemente mehrere flüchtige Grafikteilelemente umfassen können, die jeweils mit einem Softwareobjekt verlinkt sind. So zeigt Fig. 8 ein flüchtiges Grafiksymbol 80 mit zwei flüchtigen Grafikteilsymbolen 81, 82. Weiterhin ist ein flüchtiges Grafikelement 83 dargestellt, welches vier flüchtige Grafikteilelemente 84, ..., 87 umfasst.

Die von der Steuereinrichtung 4 gesteuerte Ausbildung der Symbolstruktur mit flüchtigen Grafikelementen entspricht einer Art Dominoprinzip, bei dem auf paarweise gegenüberliegenden Seiten eine Erweiterung der Symbolstruktur dem Benutzer zur Verfügung gestellt wird, sofern die jeweilige Seite noch von einem freien Anzeigebereich eingenommen wird.

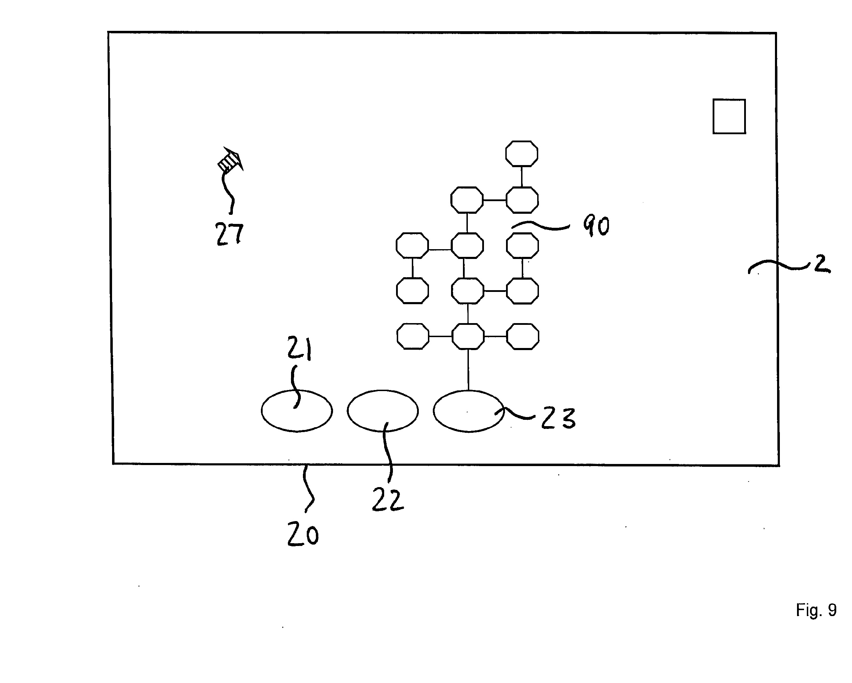

In Fig. 9 ist eine schematische Darstellung mit einer Anordnung flüchtiger Grafikelemente 90 gezeigt.

Es ist eine, einem herkömmlichen Dominostiel in der Struktur folgende Anordnung der Grafikelemente 90 geschaffen, weshalb in Verbindung mit den Grafikelementen auch von Steinen gesprochen werden kann. Diese setzt sich aus den Grafikelementen zusammen, die als Desktop-Icons gebildet sind. Die Grafikelemente können in den verschiedenen Ausführungsformen der Erfindung beliebige geometrische Formen annehmen.

Die Anordnung der Grafikelemente 90 geht vorliegend von dem grafischen Oberflächenelement 23 aus, welches eine Art Basiselement bildet. Abweichend von der Darstellung in Fig. 9 können an dem Basiselemente 23 auch weitere Baumstrukturen gebildet sein, die ihrerseits dann wieder nach dem Dominosteil ausgeführt sind. Auch das Basiselement kann in beliebiger Form als Objekt, Fläche oder Körper gewählt werden. Auf das Basiselement setzt ein zentraler Stamm auf, von dem aus dann in beliebiger Weise Abzweigungen gebildet werden können. Die Grafikelemente können beliebige im Dateisystem vorhandene Dateien sein. Die Programm-Funktionalitäten werden von den Grafikelementen aus genauso über das Betriebssystem aufgerufen, wie dies als solches für sogenannte Desktop-Icons bekannt ist.

Die Anordnung der Grafikelemente kann der Anwender zum Beispiel mittels "drag & drop" ausbilden, wie dieses oben beschrieben wurde. Die gezeigte Struktur ermöglicht es insbesondere, Programmgruppen räumlich anzuordnen, unerledigte Dateien auf einer Seite anzuordnen, eine Reihe von zu bearbeitenden Dokumenten oder E-Büchern zu bilden, die bevorstehenden Termine aus Kalender-Elementen darzustellen.

Das Verfahren eignet sich insbesondere auch für sämtliche Programme, die Folge- oder Entscheidnungsverkettung aufbauen, zum Beispiel Diagnose-, Störfall-, Analyse-, Lemprogramme oder dergleichen. Ferner werden mittels eines durch eine Animation geleiteten Mausmove logische Abfolgen von Strukturen in der Auffindung von Dateien geschaffen, auch können zum Beispiel nacheinander zu erledigende Aufgaben-Dateien in einer aneinandergereihten Struktur angeordnet werden. Aufgrund der räumlichen Anordnung in horizontaler und vertikaler Richtung kann sich jeder Anwender eine seinen Arbeits- und Denkgewohnheiten entsprechend universelle Bedien- und Arbeitsoberfläche schaffen, deren Bedienung und Struktur nicht von der Art der Daten und der Programme, die sie erzeugt haben abhängt.

Ferner eignet sich die dominoartige Baumstruktur auch für die Programmoberfläche einzelner Anwendungsprogramme, indem der Anwender sich hierbei seine Programmoberfläche aus den einzelnen Programmfunktionen selber anordnen kann.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Verfahren zum Steuern einer Anzeigeeinrichtung (1) mittels einer Steuereinrichtung (4) in einem Computersystem, wobei das Verfahren die folgenden Schritte umfasst:
- Darstellen eines grafischen Oberflächenelementes (22), welches mit einem Softwareobjekt verlinkt ist, am Rand (20) einer Anzeigefläche (2) der Anzeigeeinrichtung (1),
- Erfassen einer Positionierung einer grafischen Markierung (27), die auf der Anzeigefläche (2) angezeigt wird und einer Benutzereingabeeinrichtung zugeordnet ist, auf der Anzeigefläche (2) in Bezug zu dem grafischen Oberflächenelementes (22) mittels der Steuereinrichtung (4),
- Darstellen eines ersten flüchtigen Grafikelementes (29; 61), welches mit einem Softwareobjekt verlinkt ist, auf einer von dem Rand (20) der Anzeigefläche (2) abgewandten Seite des grafischen Oberflächenelementes (22) und sowie eines das grafische Oberflächenelement (22) und das erste flüchtige Grafikelement (29; 61) grafisch einander zuordnenden Zuordnungselementes auf der Anzeigefläche,
- Prüfen mittels der Steuereinrichtung (4), ob Anzeigebereiche auf einer von dem grafischen Oberflächenelement (22) abgewandten Seite des ersten flüchtigen Grafikelementes (29; 61) und / oder zumindest einer der hierzu benachbarten Seiten des ersten flüchtigen Grafikelementes (29; 61) für eine grafische Addition eines zweiten flüchtigen Grafikelementes frei sind, welches mit einem Softwareobjekt verlinkt ist, und
- Darstellen eines Additionssymbols (33; 34) auf der Anzeigefläche (2), welches dem Benutzer eine erlaubte grafische Addition anzeigt, in einem oder mehreren freien Anzeigebereichen benachbart zu dem ersten flüchtigen Grafikelement (29; 61), wenn das vorangehende Prüfen freie Anzeigebereiche ergibt.

2. Verfahren nach Anspruch 1, **dadurch gekennzeichnet, dass** beim Prüfen auf freie Anzeigebereiche ein Anzeigebereich als nicht frei klassifiziert wird, wenn in dem Anzeigebereich ein drittes flüchtiges Grafikelement angezeigt wird, welches mit einem Softwareobjekt verlinkt und welches ebenfalls dem grafischen Oberflächenelement (22) zugeordnet ist.

3. Verfahren nach Anspruch 1 oder 2, **dadurch gekennzeichnet, dass** beim Prüfen auf freie Anzeigebereiche Anzeigenbereiche auf den vier Seiten eines rechtwinkligen Vierecks geprüft werden.

4. Verfahren nach mindestens einem der vorangehenden Ansprüche, **dadurch gekennzeichnet, dass** das erste flüchtige Grafikelement (29) mehrere flüchtige Grafikelemente umfassend dargestellt wird, die jeweils mit einem Softwareobjekt verlinkt ist.

5. Verfahren nach mindestens einem der vorangehenden Ansprüche, **gekennzeichnet** die weiteren Schritte:
- Erfassen einer Positionierung der grafischen Markierung (27) auf der Anzeigefläche (2) in Bezug zu einem der Additionssymbole (33; 34) mittels der Steuereinrichtung (4),
- Darstellen eines neuen flüchtigen Grafikelementes (35; 70) im Anzeigebereich des einen Additionssymbols sowie eines das erste flüchtige Grafikelement (29; 61) und das neue flüchtige Grafikelement (29; 61) grafisch einander zuordnenden Zuordnungselementes auf der Anzeigefläche (2) und
- Verlinken des neuen flüchtigen Grafikelementes (35; 70) mit einem Softwareobjekt gemäß einer zuvor mittels der Steuereinrichtung (4) erfassten Benutzerauswahl.

6. Computerprogramm-Produkt mit Programmcode, welcher wahlweise auf einem computerlesbaren Speichermedium gespeichert ist und geeignet ist, beim Ablauf auf einem Rechensystem ein Verfahren nach mindestens einem der Ansprüche 1 bis 5 auszuführen.

## Geänderte Patentansprüche

### Geänderte Patentansprüche gemäss Regel 137(2) EPÜ.

**1.** Verfahren zum Steuern einer Anzeigeeinrichtung (1) mittels einer Steuereinrichtung (4) in einem Computersystem, wobei das Verfahren die folgenden Schritte umfasst:
- Darstellen eines grafischen Oberflächenelementes (22), welches mit einem Softwareobjekt verlinkt ist, am Rand (20) einer Anzeigefläche (2) der Anzeigeeinrichtung (1),
- Erfassen einer Positionierung einer grafischen Markierung (27), die auf der Anzeigefläche (2) angezeigt wird und einer Benutzereingabeeinrichtung zugeordnet ist, auf der Anzeigefläche (2) in Bezug zu dem grafischen Oberflächenelementes (22) mittels der Steuereinrichtung (4),
- Darstellen eines ersten flüchtigen Grafikelementes (30; 61), welches mit einem Softwareobjekt verlinkt ist, auf einer von dem Rand (20) der Anzeigefläche (2) abgewandten Seite des grafischen Oberflächenelementes (22) sowie eines das grafische Oberflächenelement (22) und das erste flüchtige Grafikelement (30; 61) grafisch einander zuordnenden Zuordnungselementes auf der Anzeigefläche,
- Prüfen mittels der Steuereinrichtung (4), ob Anzeigebereiche auf einer von dem grafischen Oberflächenelement (22) abgewandten Seite des ersten flüchtigen Grafikelementes (30; 61) und / oder zumindest einer der hierzu benachbarten Seiten des ersten flüchtigen Grafikelementes (30; 61) für eine grafische Addition eines zweiten flüchtigen Grafikelementes frei sind, welches mit einem Softwareobjekt verlinkt ist,
- Darstellen eines Additionssymbols (33; 34) auf der Anzeigefläche (2), welches dem Benutzer eine erlaubte grafische Addition anzeigt, in einem oder mehreren freien Anzeigebereichen benachbart zu dem ersten flüchtigen Grafikelement (30; 61), wenn das vorangehende Prüfen freie Anzeigebereiche ergibt,
- Erfassen einer Drag-Drop-Benutzerauswahl eines weiteren grafischen Oberflächenelementes (24) mittels der grafischen Markierung (27) durch die Steuereinrichtung (4),
- Erfassen einer Positionierung der grafischen Markierung (27) nach der Drag-Drop-Benutzerauswahl auf der Anzeigefläche (2) in Bezug zu einem der Additionssymbole (33; 34) mittels der Steuereinrichtung (4),
- Darstellen eines neuen flüchtigen Grafikelementes (35; 70) als zweites flüchtiges Grafikelement im Anzeigebereich des einen Additionssymbols sowie eines das erste flüchtige Grafikelement (30; 61) und das neue flüchtige Grafikelement (35; 70) grafisch einander zuordnenden Zuordnungselementes (36) auf der Anzeigefläche (2), wobei das Additionssymbol hierbei durch das neue flüchtige Grafikelement (35; 70) ersetzt wird, und
- Verlinken des neuen flüchtigen Grafikelementes (35; 70) mit einem Softwareobjekt gemäß einer zuvor mittels der Steuereinrichtung (4) erfassten Benutzerauswahl.

**2.** Verfahren nach Anspruch 1, **dadurch gekennzeichnet, dass** beim Prüfen auf freie Anzeigebereiche ein Anzeigebereich als nicht frei klassifiziert wird, wenn in dem Anzeigebereich ein drittes flüchtiges Grafikelement angezeigt wird, welches mit einem Softwareobjekt verlinkt und welches ebenfalls dem grafischen Oberflächenelement (22) zugeordnet ist.

**3.** Verfahren nach Anspruch 1 oder 2, **dadurch gekennzeichnet, dass** beim Prüfen auf freie Anzeigebereiche Anzeigenbereiche auf den vier Seiten eines rechtwinkligen Vierecks geprüft werden.

**4.** Verfahren nach mindestens einem der vorangehenden Ansprüche, **dadurch gekennzeichnet, dass** das erste flüchtige Grafikelement (30) mehrere flüchtige Grafikelemente umfassend dargestellt wird, die jeweils mit einem Softwareobjekt verlinkt ist.

**5.** Computerprogramm-Produkt mit Programmcode, welcher wahlweise auf einem computerlesbaren Speichermedium gespeichert ist und geeignet ist, beim Ablauf auf einem Rechensystem ein Verfahren nach mindestens einem der Ansprüche 1 bis 4 auszuführen.
